# EUROPÄISCHE PATENTSCHRIFT

(11) **EP 1 274 333 B1**
(45) Veröffentlichungstag und Bekanntmachung des Hinweises auf die Patenterteilung: **10.12.2003**
(21) Anmeldenummer: 01929499.0
(22) Anmeldetag: 04.04.2001
(51) Int. Cl.: A47J 43/07

(54) **KÜCHENMASCHINE MIT EINEM RÜHRGEFÄSS**
KITCHEN MACHINE WITH A STIRRER VESSEL
ROBOT MENAGER AVEC BOL MIXEUR

(30) Priorität: 18.04.2000 DE 10019126
(43) Veröffentlichungstag der Anmeldung: 15.01.2003
(73) Patentinhaber: Vorwerk & Co. Interholding GmbH, 42275 Wuppertal (DE)
(72) Erfinder: HILGERS, Stefan, Dr., 45357 Essen (DE); WEBER, Klaus-Martin, 42281 Wuppertal (DE); DÖRNER, Stefan, 42719 Solingen (DE)
(74) Vertreter: Müller, Enno, Dipl.-Ing.
(86) Internationale Anmeldenummer: EP0103803
(87) Internationale Veröffentlichungsnummer: WO01078569

(56) Entgegenhaltungen:
- EP-A- 0 322 836
- DE-A- 4 414 821
- FR-A- 2 737 380
- US-A- 6 046 438

## Beschreibung

Die Erfindung betrifft zunächst eine Küchenmaschine mit einem Rührgefäß und einem Antrieb für ein Rührwerk in dem Rührgefäß, wobei das Rührgefäß in seinem unteren Bereich aufheizbar ist und einen bodenseitigen, einen die Rührwerkhalterung aufweisenden Dom besitzt.

Eine derartige Küchenmaschine ist bspw. aus der DE-Al 44 14 821 bekannt. Bei dieser bekannten Lösung erfolgt eine Aufheizung des Rührgefäßes und des darin enthaltenen Garguts mittels eines außenseitig das Rührgefäß in dessen unterem Bereich umfassenden Widerstand-Heizelementes, welches bspw. als ein kreisförmiger Widerstandheizdraht ausgebildet ist, welcher getragen wird von einer, das Rührgefäß in der Rührgefäß-Aufnahme einspannenden Manschette.

Im Hinblick auf den zuvor beschriebenen Stand der Technik wird eine technische Problematik der Erfindung darin gesehen, eine Küchenmaschine der in Rede stehenden Art insbesondere hinsichtlich einer verbesserten Wärmeübertragung in vorteilhafter Weise weiterzubilden.

Diese Problematik ist durch den Gegenstand des Anspruchs 1 gelöst, wobei darauf abgestellt ist, dass an dem Boden des Rührgefäßes ein Widerstand-Heizelement mit auf einem Dielektrikum aufgebrachten Leiterbahnen angebracht ist, wobei das Heizelement bei insgesamt kreisscheibenförmiger Ausbildung eine zentrale, an den Dom angepaßte Ausnehmung aufweist. Zufolge dieser Ausgestaltung ergibt sich eine direkte Beheizung des Rührgefäßes und des darin enthaltenen Gargutes. Gegenüber dem bekannten Stand der Technik ergeben sich geringere Verluste. Die eingebrachte Wärme geht direkt in das Gargut über. Weiter wird durch den Verzicht auf grosse Massen zum Beheizen die Regelbarkeit des Heizsystems verbessert sowie die Aufheizgeschwindigkeit gesteigert. Zudem wird durch eine gezielte Anordnung des Heizelementes eine gleichmäßige Temperaturverteilung ermöglicht. Aufgrund des erhöhten Wirkungsgrades wird die benötigte elektrische Leistung minimiert, wodurch die vorgegebenen Einschaltzyklen bei einhergehender Steigerung der Regelgenauigkeit verkürzt werden. Weiter vorteilhaft erweist sich, dass durch die erfindungsgemäße Anordnung und Ausgestaltung des Widerstand-Heizelementes der Aufbau unempfindlicher gegenüber Toleranzen im vergleich zu herkömmlichen Systemen ist, bei welchen bekannten Systemen eine genaue Anlage zwischen Rübrgefäß und Heizung erforderlich ist.

Zur vorteilhaften Weiterentwicklung einer Küchenmaschine der in Rede stehenden Art ist vorgesehen, dass an dem Boden des Rührgefäßes ein Widerstand-Heizelement mit von einem Dielektrikum umhüllten Leiterbahnen angebracht ist. Bspw. kann hier ein von einem Dielektrikum umhüllter Rohrheizkörper vorgesehen sein, welcher an dem Boden des Rührgefäßes befestigt ist. Auch hierbei erfolgt eine direkte Beheizung des Gargutes mit dem Vorteil eines geringeren Verlustes, da die eingebrachte Wärme direkt in das Gargut übergeht. Zudem ist die Regelbarkeit des Heizsystems verbessert sowie die Aufheizgeschwindigkeit gesteigert.

Vorteilhaft ist weiter vorgesehen, dass die Leiterbahnen unter Zwischenlage des Dielektrikums an dem Boden des Rührgefäßes außenseitig befestigt sind. So kann ein Dickschicht-Heizelement oder ein Rohrheizkörper direkt an dem Topfboden oder separat auf einer, dem Topfboden zuordbaren Trägerplatte angeordnet sein. Bei einer Anordnung des Heizelementes auf einer separaten Trägerplatte kann diese sowohl fest mit dem Rührgefäßboden befestigt sein oder abnehmbar an dem Gefäßboden angeordnet sein. Weiter ist auch denkbar, das Heizelement an einem, an einem abnehmbaren Unterteil des Rührgefäßes ausgebildeten Rührgefäßboden anzuordnen. Auch besteht die Möglichkeit, dass ein als Dickschicht-Heizelement ausgebildetes Widerstand-Heizelement mit dem Rührtopf verschweißt ist, so bspw. mittels Laserverschweißung. Der Rührtopf kann desweiteren zur besseren Reinigung -wie erwähnt- auch mit einem abnehmbaren Unterteil versehen sein, wobei hierbei bspw. das Heizelement in einem aus Kunststoff gefertigten Unterteil eingegossen sein kann. Bei einer Ausbildung des Widerstand-Heizelement als Dickschicht-Heizelement besteht dieses bevorzugt aus einer Edelstahlscheibe (Substrat), die an der Unterseite mit einer Isolationsschicht (Dielektrikum) versehen ist. Hierauf sind bevorzugt im Siebdruckverfahren konzentrische Widerstandleiterbahnen aus keramischen Pasten aufgebracht, weiter bevorzugt in konzentrischen Kreisen. Durch die grossflächige Verteilung der Leiterbahnen ergibt sich eine sehr gleichmäßige Verteilung an dem Heizelement. Der Wärmeübergang vom Heizelement zum Medium erfolgt durch Wärmeleitung und ist von der Wärmeleitfähigkeit der Leiterbahn, des Dielektrikums und der Edelstahlscheibe abhängig. Der Wärmestrom in der Grenzschicht des Mediums wird bestimmt von der Größe der Heizfläche, dem Wärmeübergangskoeffizienten und der Temperaturdifferenz zwischen Medium und Edelstahlscheibe. Ein Anbrennen kritischer Speisen wird durch zu hohe Temperaturen an der Kontaktfläche der Heizung verursacht. Kritische Temperaturen können auftreten, wenn sich der Wärmeübergangskoeffizient deutlich verschlechtert. Dies ist häufig bei Speisen der Fall, die Stärke enthalten, die ab Temperaturen von 70°C verkleistern und durch eine starke Erhöhung der Viskosität zu einer Reduzierung des Wärmeübergangskoeffizienten führen. Bei unverminderter Heizleistung kommt es hiernach zu einem drastischen Temperaturanstieg an der Heizungsoberfläche an der Innenseite des Rührtapfbodens. Neben dem Hauptwärmestrom bildet sich wegen mangelnder Wärmeabfuhr ein erhöhter lateraler Wärmestrom in Richtung der Scheibenfläche aus. Um diesem nachteiligen Effekt entgegenzuwirken, ist ein Messfühler vorgesehen, der unter Durchsetzung einer Ausnehmung des Dielektrikum an der Außenseite des Bodens anliegt. Durch die Anordnung eines derartigen Temperatursensors in unmittelbarer Nähe der Leiterbahn kann die Erhöhung der Temperatur detektiert und durch Abschaltung der Heizung begrenzt werden. Hierbei ist ein Abstand zwischen dem Messfühler und der Leiterbahn von 2-8 mm vorgesehen. Durch diese Ausgestaltung wird durch eine kontinuierliche Überwachung des Temperaturanstiegs die Anbrenngefahr reduziert. In einer beispielhaften Ausgestaltung des Erfindungsgegenstandes ist zur Erfassung der Temperatur ein NTC-Element mit einem Widerstand von bspw. 10.000 Ohm vorgesehen, bei dem der Messfehler durch den existierenden Kontaktwiderstand vernachlässigbar ist. Bei einer Ausgestaltung des Heizelementes mit insgesamt kreisscheibenförmiger Ausbildung und einer zentralen, an den Dom angepasste Ausnehmung wird die Wärme durch Wärmleitung auf den, das Rührwerk halternden Dom des Rührgefäßes übertragen. Es ist jedoch auch eine Ausbildung denkbar, bei welcher der Dom einen zylindrischen Bereich aufweist und wobei in dem zylindrischen Bereich des Doms ein Widerstand-Heizelement ausgebildet ist. Letzteres kann in Form einer wie vorbeschriebenen Dickschichtheizung oder als Rohrheizkörper ausgebildet sein. Zudem ist in einer vorteilhaften Weiterbildung des Erfindungsgegenstandes vorgesehen, dass die am Rührtopf angeordnete Heizung über bspw. fünf Kontakte elektrisch mit dem Grundgerät verbunden ist, so ein Kontaktpaar zum Betrieb der Heizung bei Netzspannung, ein Kontaktpaar zur Messung des NTC-Widerstandes bei bspw. 5 Volt Gleichspannung und ein Schutzleiteranschluss. Die Kontaktierung übernimmt neben der Stromversorgung der Heizung die Funktion der korrekten Topferkennung. Bei eingesetztem Topf wird der Kontakt zum NTC (Messfühler) hergestellt, dessen Widerstand in einem definierten Bereich liegen muss. Ist dies nicht der Fall, so wird das Einschalten der Heizung durch die Gerätesoftware verhindert, um eine Fehlfunktion aufgrund falscher Widerstandswerte auszuschließen. Die Anordnung und Ausführung der Kontaktierung am Rührgefäß erfolgt bspw. derart, dass eine Reinigung des Rührgefäßes in einem herkömmlichen Geschirrspüler möglich ist. Die Spannungsversorgung der Heizung wird vor Entnahme des Rührgefäßes mit einem Schalter, bspw. bei Betätigung einer Rührgefäß-Verriegelung galvanisch getrennt und erst bei verriegeltem Rührgefäß wieder freigeschaltet.

Die Erfindung betrifft zudem eine Küchenmaschine mit einem Rührgefäß und einem Antrieb für ein Rührwerk in dem Rührgefäß, wobei das Rührgefäß in seinem unteren Bereich aufheizbar ist und einen bodenseitigen, einen die Rührwerkhalterung aufweisenden Dom besitzt. Hier wird zur vorteilhaften Weiterbildung des Erfindungsgegenstandes vorgeschlagen, dass außerhalb des Rührgefäßes, zugeordnet dem Bodenbereich nach außen abgeschirmte Mikrowellenstrahler angeordnet sind. Zufolge dieser Ausgestaltung ist eine berührungslose Heizung für eine Küchenmaschine der in Rede stehenden Art, welche zum Zerkleinern, Mahlen und Pulverisieren, Schlagen, Rühren, Garen, Emulgieren und Dampfgaren geeignet ist, angegeben. Als besonders vorteilhaft erweist sich hierbei, dass die Mikrowellenstrahler aus ringförmigen Quarzglasstrahler bestehen, welche im mittelwelligen Bereich arbeiten und übereinander angeordnet sind, so dass ein breiter Ring um das Rührgefäß entsteht, welcher zur Rührgefäß-Außenfläche einen definierten Abstand hat. Diesbezüglich sind bevorzugt mehrere, gesondert ansteuerbare Quarzglasstrahler vorgesehen, so weiter bspw. vier ringförmige Quarzglasstrahler. So können die so gebildeten Heizelemente zusammen oder auch unabhängig voneinander angesteuert werden, wodurch eine optimierte Regelung ermöglicht ist. Darüber hinaus wird vorgeschlagen, dass das Rührgefäß an seinem unteren Bereich außenseitig mit einer strahlungsabsorptionsaktiven Oberfläche ausgestattet ist, welche weiter bspw. als schwarze Lackschicht ausgebildet ist. Um einen Hitzeschutz gegen das Geräteinnere anzugeben, ist vorgesehen, dass die Mikrowellenstrahler von einem Kühlkanal umgeben sind. Letzterer ist darüber hinaus bevorzugt als ein durchströmter Luftkanal ausgebildet.

Nachstehend ist die Erfindung anhand der beigefügten Zeichnung, welche lediglich mehrere Ausführungsbeispiele darstellt, näher erläutert. Es zeigt:
- Fig. 1: eine erfindungsgemäße Küchenmaschine in Seitenansicht;
- Fig. 2: ein partiell im Bodenbereich geschnitten dargestelltes Rührgefäß mit einem Widerstand-Heizelement in einer ersten Ausführungsform;
- Fig. 3: die Unteransicht des Rührgefäßes mit Blick auf das Widerstand-Heizelement der ersten Ausführungsform;
- Fig. 4: eine schematische Schnittdarstellung durch den Bereich IV-IV in Fig. 3;
- Fig. 5: ein Diagramm zur Verdeutlichung des Temperaturanstieges des Gargutes im Verhältnis zur von einem Messfühler ermittelten Temperatur;
- Fig. 6: eine der Fig. 2 entsprechende Darstellung, jedoch eine zweite Ausführungsform des Widerstand-Heizelements betreffend;
- Fig. 7: den vergrößerten Bereich VII in Fig. 6;
- Fig. 8: eine vergrößerte Detaildarstellung gemäß Fig. 7, jedoch eine weitere Ausführungsform des Widerstand-Heizelements betreffend;
- Fig. 9: eine das in die Aufnahme der Kuchenmaschine eingesetzte Rührgefäß in einer partiell geschnittenen Darstellung bei Zuordnung eines Widerstand-Heizelementes einer weiteren Ausführungsform.

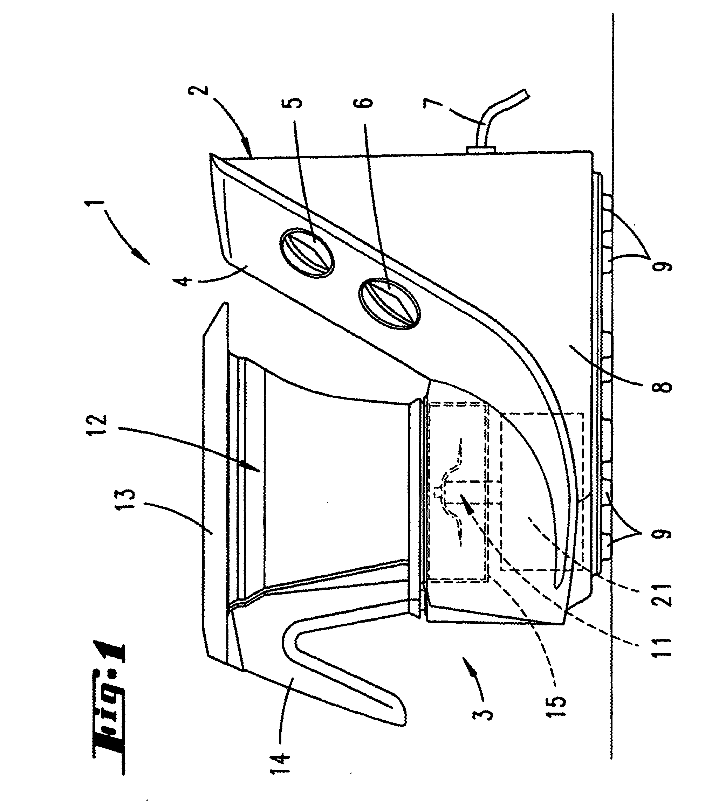

Dargestellt und beschrieben ist zunächst mit Bezug zu Fig. 1 eine Küchenmaschine 1, welche sich im wesentlichen zusammensetzt aus einem Bedien-/Steuerungsbereich 2 und einem Aufnahme-Arbeitsbereich 3. Letzterer ist topfförmig und in der Projektion etwa kreisrund ausgebildet. An diesem Bereich ist der Bedien-/Steuerungsbereich 2 angeformt, welcher eine Bedienfläche 4 mit zwei Drehschaltern 5, 6 aufweist. Rückseitig des Bedien-/Steuerungsbereiches 2 der Küchenmaschine 1 ist ein Elektrokabelanschluss 7 vorgesehen. Das sich aus den beiden Bereichen 2 und 3 zusammensetzende Gehäuse 8 besitzt weiterhin unterseitig Abstellfüße 9.

Die in der Bedienfläche 4 angeordneten Drehschalter dienen zur Temperaturregelung eines Widerstand-Heizelementes 10 (Drehschalter 5) sowie zur Drehzahlregulierung eines Rührwerkes 11 (Drehschalter 6).

In dem Aufnahme-Arbeitsbereich 3 ist ein kannenartiges Rührgefäß 12 halterbar, dessen nach oben weisende Öffnung mittels eines abnehmbaren Deckels 13 verschließbar ist. Das Rührgefäß 12 ist desweiteren außenseitig mit einem Handgriff 14 versehen.

Zur Halterung des Rührgefäßes 12 ist in dem Aufnahme-Arbeitsbereich 3 eine Aufnahme 15 vorgesehen.

Koaxial zur Vertikalachse des Rührgefäßes 12 ist dieses im Bereich des Rührgefäßbodens 16 mit dem Rührwerk 11 versehen, welches mittels einer kugelgelagerten Halterung am Rührgefäßboden 16 angeordnet ist. Das Rührwerk 11 ist auf einer Welle 17 in der Halterung drehbar gelagert, wobei die Welle 17 an ihrem unteren, den Rührgefäßboden 16 durchsetzenden Ende ein Kupplungsglied 18 besitzt.

Nach Einführen des Rührgefäßes 12 in die Aufnahme 15 stützt sich das Rührgefäß 12 mit einem Stellfuß 19 auf dem Boden der Aufnahme 15 ab. Der Stellfuß 19 ist koaxial zur Vertikalachse des Rührgefäßes 12 in einem eingezogenen, bevorzugt zylindrischen Bereich 20 des Rührgefäßhodens 16 angeordnet. Bei eingesetztem Rührgefäß 12 in die Aufnahme 15 greift das Kupplungsglied 18 in eine entsprechend ausgerichtete Kupplungsaufnahme eines elektromotorisch angetriebenen Rührwerkantriebes 21 ein.

Die dargestellte Küchenmaschine 1 dient zur Zubereitung von Speisen und stellt Grundfunktionen der Lebensmittelzubereitung zur Verfügung, so bspw. Zerkleinern, Mahlen und Pulverisieren, Schlagen, Rühren, Garen, Emulgieren und Dampfgaren. Die zur Zubereitung erforderliche Wärme wird über das erwähnte Widerstand-Heizelement 10 zugeführt. Dies geschieht erfindungsgemäß derart, dass das in dem Rührgefäß 12 zuzubereitende Gargut einen direkten Kontakt zum Widerstand-Heizelement 10 besitzt.

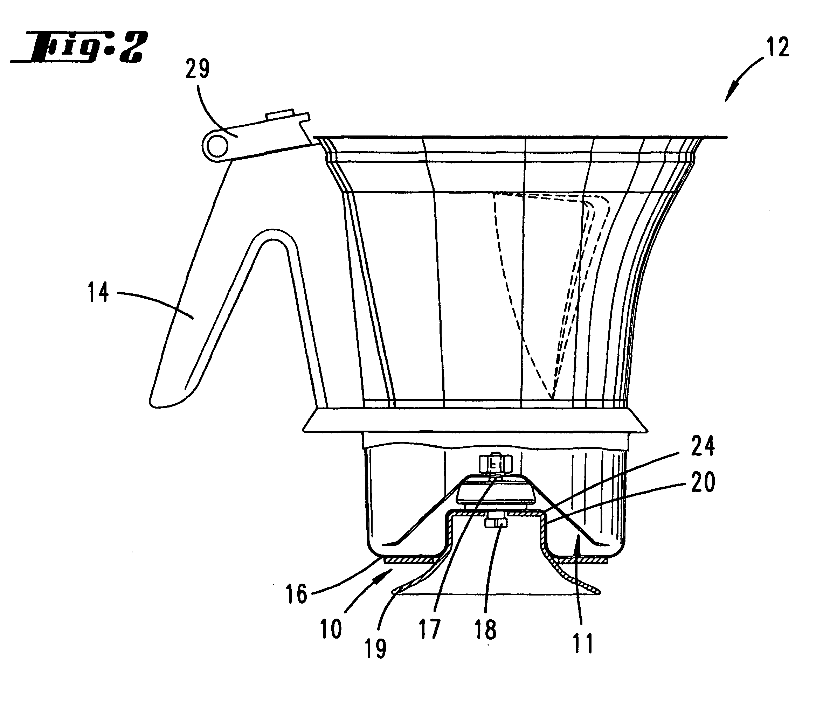

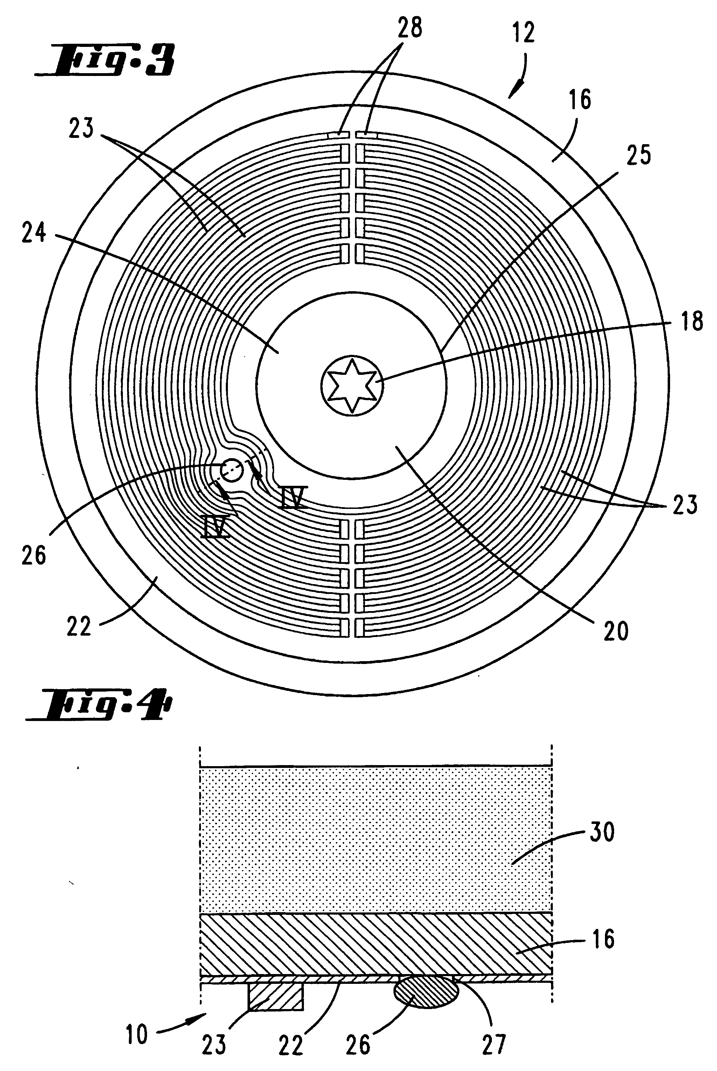

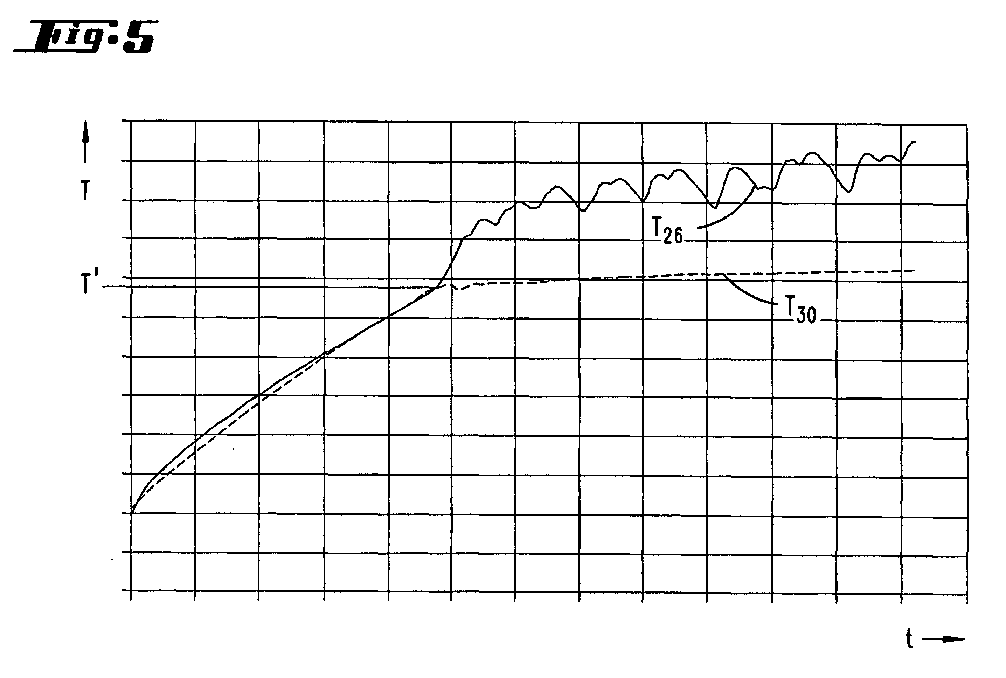

Erfindungsgemäß ist zunächst gemäß den Fig. 2 bis 4 ein Widerstand-Heizelement 10 vorgesehen, welches auf einem, eine Isolationsschicht bildenden Dielektrikum 22 aufgebrachte Leiterbahnen 23 aufweist. Die Widerstandsleiterbahnen 23 sind aus keramischen Pasten im Siebdruckverfahren auf das Dielektrikum aufgebracht, wobei gemäß Fig. 3 eine konzentrische Anordnung von Leiterbahnen 23 bevorzugt wird.

Desweiteren ist der Rührgefäßboden 16 Bestandteil des Widerstand-Heizelementes 10, wozu dieser als Edelstahlscheibe (Substrat) ausgebildet ist, auf deren Unterseite das Dielektrikum 22 mit den Leiterbahnen 23 aufgebracht sind.

In dem dargestellten Ausführungsbeispiel ist das so gebildete Widerstand-Heizelement 10 insgesamt kreisscheibenförmig ausgebildet mit einer zentralen, an den durch den eingezogenen Bereich 20 des Rührgefäßbodens 16 gebildeten Dom 24 angepaßten Ausnehmung 25.

Zufolge dieser Ausgestaltung ist ein ringförmiges Dickschicht-Heizelement an der Unterseite des Rührgefäßes 12 ausgebildet, wobei dieses Heizelement 10 mit dem Rührgefäß 12 verschweißt, bspw. laserverschweißt ist. Alternativ kann das Rührgefäß 12 auch mit einem abnehmbaren Unterteil versehen sein, wobei in diesem Fall das Heizelement 10 auch in einem Rührgefäßunterteil aus Kunststoff eingegossen sein kann.

Durch die großflächige Verteilung der Leiterbahnen 23 ergibt sich eine sehr gleichmäßige Wärmeverteilung an dem Heizelement 10. Zur Temperaturregelung ist ein Messfühler 26 in Form eines NTC-Elements mit einem Widerstand von bspw. 10.000 Ohm vorgesehen. Dieser Messfühler ist in unmittelbarer Nähe der Leiterbahnen 23 angeordnet, wodurch die Erhöhung der Temperatur detektiert und durch Abschaltung der Heizung begrenzt wird. Hierdurch wird durch eine kontinuierliche Überwachung des Temperaturanstieges die Anbrenngefahr reduziert.

Der Abstand zwischen Messfühler 26 und den benachbarten Leiterbahnen beträgt ca. 2-8 mm (vergl. Fig. 3).

Der Messfühler 26 ist weiter derart positioniert, dass dieser unter Durchsetzung einer Ausnehmung 27 des Dielektrikums 22 an der Außenseite des Rührgefäßbodens 16 anliegt.

Die Anordnung des Messfühlers 26 in unmittelbarer Nähe zum Heizelement 10 verhindert Fehler in der Regelgenauigkeit des Heizelementes 10.

Das am Rührgefäß 12 angebrachte Widerstand-Heizelement 10 ist bevorzugt über fünf Kontakte elektrisch mit dem Grundgerät verbunden, so über ein Kontaktpaar 28 zum Betrieb des Heizelementes 10 bei Netzspannung, einem nicht dargestellten Kontaktpaar zur Messung des Messfühler-Widerstandes bei bevorzugt 5 Volt Gleitspannung und einem weiter nicht dargestellten Schutzleiteranschluss.

Die Kontaktierung übernimmt neben der Stromversorgung des Heizelementes 10 die Funktion der korrekten Rührgefäßerkennung. Bei eingesetztem Rührgefäß 12 wird der Kontakt zum Messfühler 26 hergestellt, dessen Widerstand in einem definierten Bereich liegen muss. Ist dies nicht der Fall, so wird das Einschalten der Heizung durch die Gerätesoftware verhindert, um eine Fehlfunktion aufgrund falscher Widerstandwerte auszuschließen.

Die Anordnung und Ausführung der Kontaktierung am Rührgefäß 12 erfolgt derart, dass eine Reinigung des Rührgefäßes 12 in einem herkömmlichen Geschirrspüler möglich ist. Die Spannungsversorgung der Heizung wird vor Entnahme des Rührgefäßes 12 mit einem Schalter (bspw. daumehbetätigbare, schwenkbare Handhabe 29 am Handgriff 14 des Rührgefäßes 12) bei Betätigung der Rührgefäß-Verriegelung galvanisch getrennt und erst bei verriegeltem Rührgefäß 12 freigeschaltet.

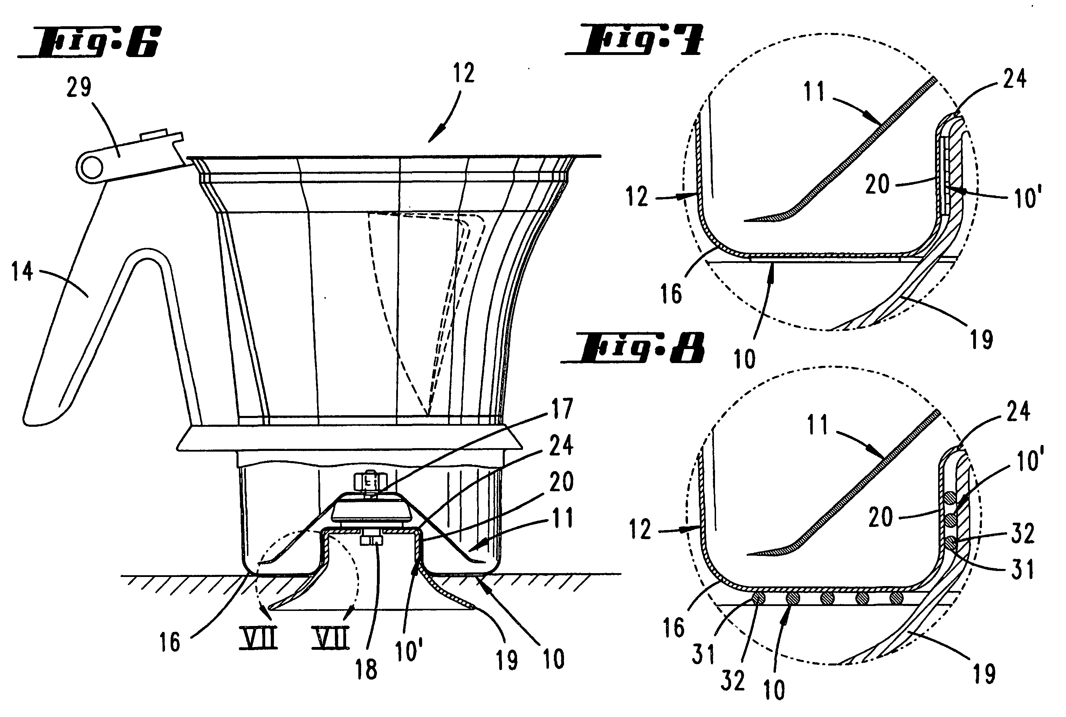

Das in Fig. 5 dargestellte Diagramm zeigt mit dem Aufheizvorgang bei der Vorbereitung eines stärkehaltigen Mediums 30 den Anstieg der mittels des Messfühlers 26 in der Nähe der Leiterbahnen 23 gemessenen Temperaturwertes. In dem Diagramm ist im Verhältnis zur Zeit t deutlich der Anstieg der Messfühler-Temperatur T26 gegenüber der Medientemperatur T30 ab einem Temperaturniveau von ca. 78°C (T') zu erkennen. Der ungleichmäßige Temperaturverlauf der Messfühlerkurve T26 im Bereich oberhalb des Temperaturniveaus T' beruht auf einem Einund Ausschalten des Heizelementes 10 zur annähernden Konstanthalterung der Medientemperatur T30.

Zufolgedessen ist ein Anbrennen kritischer Speisen durch zu hohe Temperaturen an der Kontaktfläche des Heizelementes 10 (medienzugewandte Innenseite des Rührgefäßbodens 16) entgegengewirkt. Derartige kritische Temperaturen können auftreten, wenn sich der Wärmeübergangskoeffizient deutlich verschlechtert, was bspw. sehr häufig bei Speisen der Fall ist, die Stärke enthalten, die ab Temperaturen von ca. 70°C verkleistern und durch eine starke Erhöhung der Viskosität zu einer Reduzierung des Wärmeübergangskoeffizienten führen. Bei unverminderter Heizleistung würde es dann zu einem drastischen Temperaturanstieg an der Heizungsoberfläche . an der Innenseite des Rührgefäßes 12 kommen.

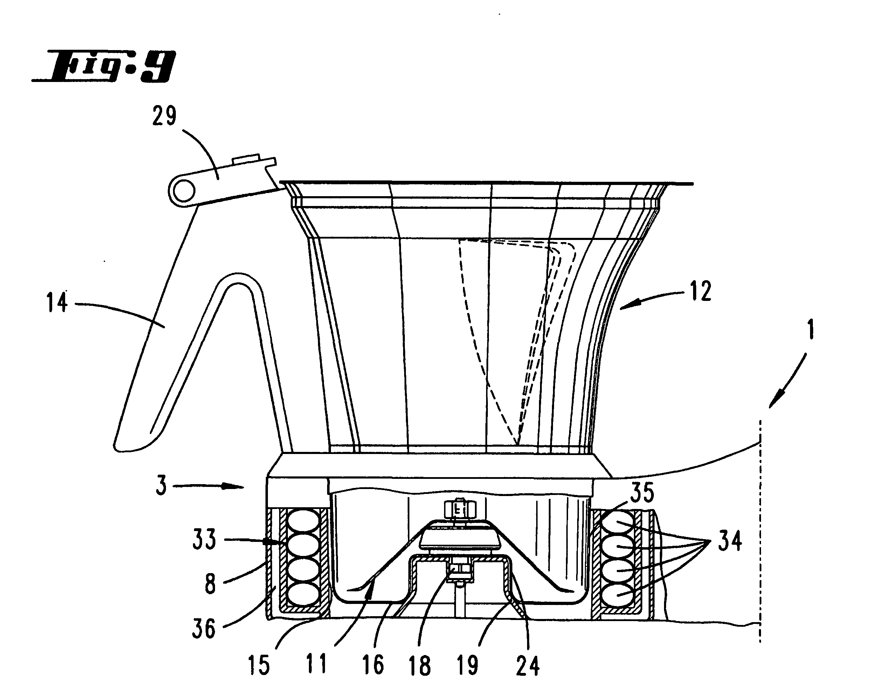

Wie in den Fig. 6 und 7 dargestellt, ist in einer weiteren Ausführungsform vorgesehen, dass in dem, den Dom 24 bildenden zylindrischen Bereich 20 des Rührgefäßbodens 16 ein weiteres, gegebenenfalls mit dem unterseitig des Rührgefäßbodens 16 angebrachten Widerstand-Heizelementes 10 elektrisch verbundenes Widerstand-Heizelement 10' gleichfalls außenseitig angeordnet angebracht ist. Auch dieses Widerstand-Heizelement 10' ist gemäß dem ersten Ausführungsbeispiel als ein Dickschicht-Heizelement ausgebildet, mit einem, den Dom 24 bildenden Edelstahlelement, an welchem rührgefäßaußenseitig eine Isolationsschicht in Form eines Dielektrikums 22 aufgebracht ist. Auch hierauf sind im Siebdruckverfahren Widerstandsleiterbahnen 23 aus keramischen Pasten aufgebracht.

Desweiteren kann gemäß der Detaildarstellung in Fig. 8 in einer weiteren Ausführungsform sowohl das rührgefäßbodenunterseitige Widerstand-Heizelement 10 als auch das dominnenseitige Widerstand-Heizelement 10' als Rohrheizkörper ausgebildet sein, bei welchen von einem Dielektrikum 31 umhüllte, Wärmeleiterbahnen 32 ausbildende Heizelemente vorgesehen sind.

In einer weiteren Ausführungsform gemäß Fig. 9 sind außerhalb des Rührgefäßes 12 zugeordnet dessen Bodenbereich in dem Gehäuse 8, die Aufnahme 15 umfassend, Mikrowellenstrahler 33 angeordnet. Letztere sind als die Aufnahme 15 ringförmig umfassende Quarzglasstrahler 34 ausgebildet, welche im mittelwelligen Bereich arbeiten.

In dem dargestellten Ausführungsbeispiel sind vier, übereinander angeordnete, ringförmige Quarzglasstrahler 34 vorgesehen, so dass ein breiter Heizelementring um den Bodenbereich des Rührgefäßes 12 gebildet ist.

Die Quarzglasstrahler 34 sind zur Rührgefäß-Außenfläche beabstandet, wobei diese Rührgefäß-Außenfläche 35 zumindest im Bodenbereich des Rührgefäßes 12 mit einer strahlungsabsorptionsaktiven Oberfläche ausgestattet ist.
So kann bspw. die Oberfläche als schwarze Lackschicht ausgebildet sein.

Desweiteren ist zum Hitzeschutz gegen das Gerät bzw. gegen das Gehäuse 8 ein, die Mikrowellenstrahler 33 umgebender, als durchströmter Luftkanal ausgebildeter Kühlkanal 36 vorgesehen, wobei ein Rühlluftstrom bspw. mittels des, das Rührwerk 11 in dem Rührgefäß 12 antreibenden Antriebs 21 erzeugt sein kann.

Die aus den Quarzglasstrahlern 34 gebildeten Heizelemente sind zusammen oder auch unabhängig voneinander einzeln ansteuerbar, wodurch eine optimierte Regelung der so gebildeten Heizung ermöglicht ist.

Zufolge dieser Ausführungsform der erfindungsgemäßen Lösung ist eine berührungslose Heizung für ein Rührgefäß 12 angegeben.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Küchenmaschine (1) mit einem Rührgefäß (12) und einem Antrieb (21) für ein Rückwerk (11) in dem Rührgefäß (12), wobei das Rührgefäß (12) in seinem unteren Bereich aufheizbar ist und einen bodenseitigen, einen die Rührwerkhalterung aufweisenden Dom (24) besitzt, **dadurch gekennzeichnet, dass** an dem Boden (16) des Rührgefäßes (12) ein Widerstand-Heizelement (10) mit auf einem Dielektrikum (22) aufgebrachten Leiterbahnen (23) angebracht ist, wobei das Heizelement (10) bei insgesamt kreisscheibenförmiger Ausbildung eine zentrale, an den Dom (24) angepasste Ausnehmung (25) aufweist.

2. Küchenmaschine nach Anspruch 1, **dadurch gekennzeichnet, dass** an dem Boden des Rührgefäßes (12) ein Widerstand-Heizelement (10) mit von einem Dielektrikum (31) umhüllten Leiterbahnen (32) angebracht ist.

3. Küchenmaschine nach einem der vorhergehenden Ansprüche, **dadurch gekennzeichnet, dass** die Leiterbahnen (23, 32) unter Zwischenlage des Dielektrikums (22, 31) an dem Boden (16) des Rührgefäßes (12) außenseitig befestigt sind.

4. Küchenmaschine nach einem der vorhergehenden Ansprüche, **dadurch gekennzeichnet, dass** ein Messfühler (26) vorgesehen ist, der unter Durchsetzung einer Ausnehmung (27) des Dielektrikums (22) an der Außenseite des Bodens (16) anliegt.

5. Küchenmaschine nach einem der vorhergehenden Ansprüche, **dadurch gekennzeichnet, dass** der Dom (24) einen zylindrischen Bereich (20) aufweist und das in dem zylindrischen Bereich (20) des Doms (24) ein Widerstand-Heizelement (10') ausgebildet ist

6. Küchenmaschine nach einem der vorhergehenden Ansprüche, **dadurch gekennzeichnet, dass** außerhalb des Rührgefäßes (12), zugeordnet dem Bodenbereich nach außen abgeschirmte Mikrowellenstrahler (33) angeordnet sind.

7. Küchenmaschine nach Anspruch 6, **dadurch gekennzeichnet, dass** die Mikrowellenstrahler (33) aus ringförmigen Quarzglasstrahlern (34) bestehen.

8. Küchenmaschine nach einem der Ansprüche 6 bis 7, **dadurch gekennzeichnet, dass** mehrere, gesondert ansteuerbare Quarzglasstrahler (34) vorgesehen sind.

9. Küchenmaschine nach einem der Ansprüche 6 bis 8, **dadurch gekennzeichnet, dass** das Rührgefäß (12) an seinem unteren Bereich außenseitig mit einer strahlungsabsorptionsaktiven Oberfläche ausgestattet ist.

10. Küchenmaschine nach einem der Ansprüche 6 bis 9, **dadurch gekennzeichnet, dass** die Oberfläche als schwarze Lackschicht ausgebildet ist.

11. Küchenmaschine nach einem der Ansprüche 6 bis 10, **dadurch gekennzeichnet, dass** die Mikrowellenstrahler (33) von einem Kühlkanal (36) umgeben sind.

12. Küchenmaschine nach einem der Ansprüche 6 bis 11, **dadurch gekennzeichnet, dass** der Kühlkanal (36) als ein durchströmter Luftkanal ausgebildet ist.

## Claims

1. A food processor (1) with a mixing vessel (12) and a drive (21) for an agitator (11) in the mixing vessel (12), the mixing vessel (12) being heatable in its lower region and having on the bottom a dome (24) which has the securing mount for the agitator, **characterized in that** a resistance heating element (10) with printed conductors (23) applied to a dielectric (22) is fitted on the base (16) of the mixing vessel (12), the generally circular, disk-shaped heating element (10) having a central recess (25) which is adapted to the dome (24).

2. The food processor as claimed in claim 1, **characterized in that** a resistance heating element (10) with printed conductors (32) enveloped by a dielectric (31) is fitted on the base of the mixing vessel (12) .

3. The food processor as claimed in one of the preceding claims, **characterized in that** the printed conductors (23, 32) are secured on the outside of the base (16) of the mixing vessel (12) with the dielectric (22, 31) interposed.

4. The food processor as claimed in one of the preceding claims, **characterized in that** a measuring sensor (26) is provided, which while passing through a clearance (27) in the dielectric (22) rests against the outer side of the base (16).

5. The food processor as claimed in one of the preceding claims, **characterized in that** the dome (24) has a cylindrical region (20) and **in that** a resistance heating element (10') is formed in the cylindrical region (20) of the dome (24).

6. The food processor (1) as claimed in one of the preceding claims, **characterized in that** externally shielded microwave radiators (33) are disposed outside the mixing vessel (12), associated with the bottom region.

7. The food processor as claimed in claim 6, **characterized in that** the microwave radiators (33) comprise annular quartz-glass radiators (34).

8. The food processor as claimed in one of claims 6 to 7, **characterized in that** a plurality of separately activatable quartz-glass radiators (34) are provided.

9. The food processor as claimed in one of claims 6 to 8, **characterized in that** the mixing vessel (12) is provided on the outer side of its lower region with a surface with active radiation absorption.

10. The food processor as claimed in one of claims 6 to 9, **characterized in that** the surface is formed as a black coating.

11. The food processor as claimed in one of claims 6 to 10, **characterized in that** the microwave radiators (33) are surrounded by a cooling duct (36).

12. The food processor as claimed in one of claims 6 to 11, **characterized in that** the cooling duct (36) is formed as an air duct with a through-flow.

## Revendications

1. Robot ménager (1) avec un bol mixeur(12) et un dispositif d'entraînement (21) pour un agitateur (11) placé dans le bol mixeur (12), le bol mixeur (12) étant susceptible d'être chauffé dans sa zone inférieure et comportant, côté fond, un dôme (24) présentant la fixation d'agitateur, **caractérisé en ce que**, sur le fond (16) du bol mixeur (12), est monté un élément chauffant à résistance (10) avec des pistes conductrices (23) appliquées sur un diélectrique (22), l'élément chauffant (10) présentant, lorsque l'on a à faire à une réalisation globalement en forme de disque circulaire, un évidement (25) central, adopté au dôme (24).

2. Robot ménager selon la revendication 1, **caractérisé en ce qu'**un élément chauffant à résistance (10), avec des pistes conductrices (32) enveloppées par un diélectrique (31), est monté sur le fond du bol mixeur (12).

3. Robot ménager selon l'une des revendications précédentes, **caractérisé en ce que** les pistes conductrices (23, 32) sont fixées extérieurement sur le fond (16) du bol mixeur (12), avec interposition du diélectrique (22, 31).

4. Robot ménager selon l'une des revendications précédentes, **caractérisé en ce qu'**une sonde de température (26) est prévue, s'appliquant sur la face extérieure du fond (16), en traversant un évidement (27) ménagé dans le diélectrique (22).

5. Robot ménager selon l'une des revendications précédentes, **caractérisé en ce que** le dôme (24) présente une zone (20) cylindrique, et **en ce qu'**un élément chauffant (10') à résistance est réalisé dans la zone (20) cylindrique du dôme (24).

6. Robot ménager selon l'une des revendications précédentes, **caractérisé en ce que**, à l'extérieur du bol mixeur (12), associés à la zone de fond, sont disposés des émetteurs de micro-ondes (33) écrantés vers l'extérieur.

7. Robot ménager selon la revendication 6, **caractérisé en ce que** les émetteurs de micro-ondes (33) sont formés d'émetteurs en verre au quartz (34) en forme d'anneaux.

8. Robot ménager selon l'une des revendications 6 à 7, **caractérisé en ce qu'**une pluralité d'émetteurs en verre au quartz (34), pouvant être commandés séparément, sont prévus.

9. Robot ménager selon l'une des revendications 6 à 8, **caractérisé en ce que** le bol mixeur (12) est muni, sur sa zone inférieure, du côté extérieur, d'une surface active dans l'absorption d'un rayonnement.

10. Robot ménager selon l'une des revendications 6 à 9, **caractérisé en ce que** la surface est réalisée sous la forme de couches de vernis noir.

11. Robot ménager selon l'une des revendications 6 à 10, **caractérisé en ce que** les émetteurs de micro-ondes (33) sont entourés par un canal de refroidissement (36).

12. Robot ménager selon l'une des revendications 6 à 11, **caractérisé en ce que** le canal de refroidissement (36) est réalisé sous forme de canal à air, traversé par un écoulement.
